Europäisches Patentamt

(19) European Patent Office

Office européen des brevets

(11) Publication number: **0 148 736**
**B1**

## (12) EUROPEAN PATENT SPECIFICATION

(45) Date of publication of patent specification: 04.05.88

(51) Int. Cl.⁴: **G 01 N 21/76**

(21) Application number: 84850299.3

(22) Date of filing: 09.10.84

(54) Method and apparatus for luminescence measurement.

(30) Priority: 19.12.83 SE 8307024

(43) Date of publication of application:
17.07.85 Bulletin 85/29

(45) Publication of the grant of the patent:
04.05.88 Bulletin 88/18

(84) Designated Contracting States:
DE FR GB SE

(56) References cited:
EP-A-0 025 350
EP-A-0 073 501
DE-A-3 221 063
FR-A-2 447 028

Patent Abstracts of Japan, abstract of JP
57-179649, 5 November 1982

(73) Proprietor: **Wallac Oy**
**P.O. Box 10**
**SF-20101 Turku 10 (FI)**

(72) Inventor: **Soini, Erkki**
**Sirppitie 1.J.**
**SF-20540 Turku (FI)**

(74) Representative: **Johansson, Lars E.**
**LKB-Produkter AB Box 305**
**S-161 26 Bromma (SE)**

Courier Press, Leamington Spa, England.

## Description

### Technical field

The present invention relates to a method for luminescence measurement of samples in transparent multi-well plates or strips, comprising adding a luminescence instigating reagent to the samples in sequence to instigate luminescence reactions, and measuring the resulting photon emission during a predetermined measurement period, as well as an apparatus for carrying out the method.

### Background art

Luminometry is an established method in biochemistry and immunology. In luminometric assays or measurements the luminescence reaction, i.e. the photon emission, is initiated in that an activating reagent is added to the samples to be mesured, whereupon the photon emission is measured by means of a photon-detector during a predetermined measurement period. Any chemical component necessary for the luminescence reaction can be used as activating reagent. The reaction is started instantaneously when the activating reagent mixes with the other components of the sample and lasts a certain period of time depending on the speed of the reaction, which in its turn is dependent on the decay time constant of the reaction. The decay time constants in luminometric assays typically range from about 10 seconds to a couple of hours.

From EP—A—25350 it is known to use transparent multi-well plates or strips as sample containers. In the apparatus according to EP—A—25350 the luminescence reactions are instigated and measured in a row of wells at the same time. In order to prevent the occurrence of crosstalk between the wells, a plate support is provided, which has a grid-like structure of opaque partitions which form individual compartments for containing the bottom portions of the wells of the plate or strip. Such partitions can, however, not completely prevent photons from the reaction in one well to impinge on the photon-detectors that measure the reactions in adjacent wells.

### Disclosure of invention

The object of the present invention is to render it possible in a simple manner to use multi-well plates or strips as sample containers in connection with luminescence measurements without the use of the above opaque partitions.

This is attained according to the present invention as claimed in that an on-going luminescence reaction is actively interrupted at the end of the measurement period before a corresponding reaction is instigated in the next sample.

### Detailed description

So far, conventional transparent multi-well plates or strips have required support plates having opaque partitions which form individual compartments for the wells of the multi-well plate or strip in order for such plates or strips to be used as sample containers in connection with luminescence measurements, since the luminescence reactions continue in the samples after that they have been measured.

In order to make it possible in a simple manner to use conventional transparent multi-well plates and strips as sample containers at luminescent measurements the luminescence reactions are instigated and measured in one well at a time and at the end of the respective measurement period the on-going luminescence reaction is actively interrupted in the sample that is being measured before a corresponding reaction is instigated in the following sample.

According to a first embodiment of the present invention the on-going luminescence reaction can be actively interrupted by the addition to the sample of a luminescence quenching reagent.

The nature and composition of this luminescence quenching reagent depends on the luminescence system used for the assay in question. A number of possible quenching reagents are available which very effectively quench the luminescence within one or two seconds.

As examples of luminescence quenching reagents acids can be mentioned such as trichlor acetic acid, hydrochloric acid and acetic acid. A change of pH normally quenches the chemiluminescence of bioluminescence reactions quite effectively. Moreover, the use of precipitating reagents is possible, e.g. ammonium sulphate which precipitates proteins and enzymes and prevents them from contributing to the luminescence reactions. As a further example metallic catalyzators can be mentioned, which are typical for bioluminescence systems and can be trapped with a suitable chelating agent, so that the luminescence is eliminated.

Luminometers for luminescence measurements of samples that successively come into a measurement position, comprise in the measurement position a dispensing means for dispensing the luminescence instigating reagent in sequence to the samples to instigate luminescence reactions in the samples, and a photon-detector which is adapted to measure the photon emission from the respective sample during a predetermined measurement period.

According to an embodiment of the invention an interrupting means is also provided in the measurement position.

According to a first embodiment of the apparatus according to the present invention this interrupting means can be adapted to add the above luminescence quenching reagent to the sample at the end of the respective measurement period in order to interrupt the on-going luminescence reaction before a corresponding reaction is initiated in the following sample.

According to a second embodiment of the apparatus according to the present invention the interrupting means can be adapted to empty the well in which the luminescence reaction is going on before the luminescence quenching reagent is added in order to quench the luminescence reaction going on in any residues of the sample in the well. The wells can be emptied, e.g. by means of a suction pump.

With such an arrangement it will quite easily be possible to use conventional transparent multi-well plates and strips as sample containers for luminescence measurements in a luminometer.

## Claims

1. Method for luminescence measurement of samples in transparent multi-well plates or strips, comprising adding a luminescence instigating reagent to the samples in sequence to instigate luminescence reactions, and measuring the resulting photon emission during a predetermined measurement period, characterized in that an on-going luminescence reaction is actively interrupted at the end of the measurement period before a corresponding reaction is instigated in the next sample.

2. Method according to claim 1, characterized in that the on-going luminescence reaction is interrupted in that a luminescence quenching reagent is added.

3. Method according to claim 1, characterized by the interruption being carried out by emptying the well in which the reaction is going on, quenching reagent being added to quench any residues in the cell.

4. Apparatus for luminescence measurement of samples in transparent multi-well plates or strips, comprising dispensing means for dispensing a luminescence instigating reagent in sequence to the samples to instigate a luminescence reaction in each sample, and a photon-detector adapted to measure the resulting photon emission from the respective samples during a predetermined measurement period, characterized in that a means is provided to actively interrupt an on-going luminescence reaction at the end of the measurement period before a corresponding reaction is instigated in the next sample.

5. Apparatus according to claim 4, characterized in that said means is adapted to interrupt the on-going luminescence reaction by adding a luminescence quenching reagent.

6. Apparatus according to claim 4, characterized in that said means is provided for emptying the well in which the reaction is going on and adding quenching reagent to the well to quench any residues therein.

## Patentansprüche

1. Verfahren zur Lumineszenzmessung von Proben in transparenten, mit mehreren Vertiefungen versehenen Platten oder Streifen, bei dem ein Lumineszenz in Gang setzendes Mittel den Proben in einer Lumineszenzreaktionen in Gang zu setzenden Folge beigegeben wird, und die sich ergebende Photonenemission während einer bestimmten Meßdauer gemessen wird, dadurch gekennzeichnet, daß eine laufende Lumineszenzreaktion am Ende der Meßdauer aktiv unterbrochen wird, bevor eine entsprechende Reaktion bei der nächsten Probe in Gang gesetzt wird.

2. Verfahren nach Anspruch 1, dadurch gekennzeichnet, daß die laufende Lumineszenzreaktion dadurch unterbrochen wird, daß ein die Lumineszenz löschendes Mittel zugefügt wird.

3. Verfahren nach Anspruch 1, gekennzeichnet durch die Unterbrechung, welche durch Entleeren der Vertiefung, in welcher die Reaktion gerade läuft, und Zugabe des die Lumineszenz löschenden Mittels um Löschen von Rückständen in der Vertiefung, durchgeführt wird.

4. Vorrichtung zur Lumineszenzmessung von Proben in transparenten, mit mehreren Vertiefungen versehenen Platten oder Streifen mit Abgabemitteln zum Abgeben eines Lumineszenz in Gang setzenden Mittels in Aufeinanderfolge zu den Proben zur Ingangsetzung einer Lumineszenzreaktion in jeder Probe, und einem Photonendetektor, der geeignet ist zur Messung der sich ergebenden Photonen-Emission von den entsprechenden Proben während einer vorbestimmten Meßdauer, dadurch gekennzeichnet, daß ein Mittel vorgesehen ist zur aktiven Unterbrechung einer laufenden Lumineszenzreaktion am Ende der Meßdauer, bevor eine entsprechende Reaktion in der nächsten Probe in Gang gesetzt ist.

5. Vorrichtung nach Anspruch 4, dadurch gekennzeichnet, daß das Mittel geeignet ist zur Unterbrechung der laufenden Lumineszenzreaktion durch Zugabe eines lumineszenzlöschenden Mittels.

6. Vorrichtung nach Anspruch 4, dadurch gekennzeichnet, daß das Mittel vorgesehen ist zum Entleeren der Vertiefung, in welcher die Reaktion gerade andauert und zur Zugabe des Löschungsmittels in die Vertiefung zum Löschen von Rückständen darin.

## Revendications

1. Procédé pour mesurer la luminescence d'échantillons dans des plaques ou bandes transparentes à plusieurs puits, consistant à ajouter en série aux échantillons un réactif provoquant une luminescence pour déclencher des réactions de luminescence, et à mesurer l'émission résultante de photons pendant un temps de mesure prédéterminé, caractérisé en ce qu'une réaction de luminescence en cours est interrompue brutalement à la fin du temps de mesure avant de provoquer une réaction correspondante dans l'échantillon suivant.

2. Procédé suivant la revendication 1, caractérisé en ce que la réaction de luminescence en cours est interrompue par l'addition d'un réactif d'extinction de luminescence.

3. Procédé suivant la revendication 1, caractérisé en ce que l'interruption est effectuée en vidant le puits dans lequel la réaction a lieu, le réactif d'extinction étant ajouté pour provoquer l'extinction de tout résidu présent dans la cuve.

4. Appareil pour mesurer la luminescence d'échantillons dans des plaques ou bandes transparentes à plusieurs puits, comprenant un système de distribution destiné à fournir en série aux échantillons un réactif provoquant une luminescence pour déclencher une réaction de luminescence dans chaque échantillon, et un photodétecteur apte à mesurer l'émission résultante de photons provenant des échantillons respectifs au cours d'un temps de mesure prédéterminé, caractérisé en ce qu'un dispositif est proposé pour interrompre brutalement une réaction de luminescence en cours à la fin du temps de mesure avant de déclencher une réaction correspondante dans l'échantillon suivant.

5. Appareil suivant la revendication 4, caractérisé en ce que le dispositif est apte à interrompre la réaction de luminescence en cours par l'addition d'un réactif d'extinction de luminescence.

6. Appareil suivant la revendication 4, caractérisé en ce que le dispositif est fourni pour vider le puits dans lequel la réaction a lieu et introduire dans le puits le réactif d'extinction pour provoquer l'extinction de tout résidu s'y trouvant.